# EUROPEAN PATENT APPLICATION

(11) **EP 1 615 142 A2**
(43) Date of publication of application: **11.01.2006**
(21) Application number: 05250189.7
(22) Date of filing: 14.01.2005
(51) Int. Cl.: G06F 15/76

(54) **Reconfigurable processor and semiconductor device**

(30) Priority: 25.06.2004 JP 2004188095
(71) Applicant: FUJITSU LIMITED, Kawasaki-shi, Kanagawa 211-8588 (JP)
(72) Inventor: Kasama, Ichiro, c/o Fujitsu Limited, Kawasaki-shi, Kanagawa 211-8588 (JP); Suzuki, Toshiaki, c/o Fujitsu Limited, Kawasaki-shi, Kanagawa 211-8588 (JP); Kawano, Tetsuo, c/o Fujitsu Limited, Kawasaki-shi, Kanagawa 211-8588 (JP); Imafuku, Kazuaki, c/o Fujitsu Limited, Kawasaki-shi, Kanagawa 211-8588 (JP); Furukawa, Hiroshi, c/o Fujitsu Limited, Kawasaki-shi, Kanagawa 211-8588 (JP)
(74) Representative: Hitching, Peter Matthew

(57) **Abstract**

A reconfigurable processor in which an application can be switched more freely. A switching condition associating section (2) associates output from a plurality of arithmetic and logic unit modules (1a, b, c, d) used as switching conditions for switching the operation of an arithmetic and logic unit group with a plurality of states indicative of switching condition codes. When a switching condition code output section (3) decides that a switching condition comes into existence on the basis of the output from the plurality of arithmetic and logic unit modules set as the switching conditions, the switching condition code output section (3) outputs a switching condition code corresponding to the switching condition which comes into existence. When a sequencer accepts the switching condition code, the sequencer switches the arithmetic and logic unit group to a state corresponding to the switching condition code.

## Description

### BACKGROUND OF THE INVENTION

### (1) Field of the Invention

This invention relates to a reconfigurable processor and semiconductor device and, more particularly, to a reconfigurable processor and semiconductor device comprising an arithmetic and logic unit group including a plurality of arithmetic and logic units and a sequencer for controlling the operation of the arithmetic and logic unit group.

### (2) Description of the Related Art

A change in specification, the addition of a function, the addition of a new service, or the like may be made after shipments ofproducts. Conventionally,reconfigurable processors havebeen provided to change functions without remanufacturing devices. Conventional reconfigurable processors can meet the above-mentioned situations only by replacing circuit configuration information.

For example, Digital Application Processor/Distributed Network Architecture (registered trademark) (DAP/DNA) manufactured at IP-Flex's and Dynamically Reconfigurable Processor (DRP) manufactured at NEC's are known as such reconfigurable processors.

The DAP/DNA includes a plurality of composite arithmetic and logic unit modules two-dimensionally arranged and a plurality of pieces of information in which a configuration in each module and connection between arithmetic and logic units are described and handles different algorithms by switching these pieces of information.

The DRP comprises a plurality of arithmetic and logic unit modules each of which includes an instruction memory, an instruction decoder, and an arithmetic and logic unit and which are two-dimensionally arranged. The operation of the plurality of arithmetic and logic unit modules is managed by a state transition management section. The state transition management section has a state transition table. By designating an address in an instruction memory to be executed by each arithmetic and logic unit module in accordance with the state transition table, the state transition management section selects any instruction and makes each arithmetic and logic unit module execute it.

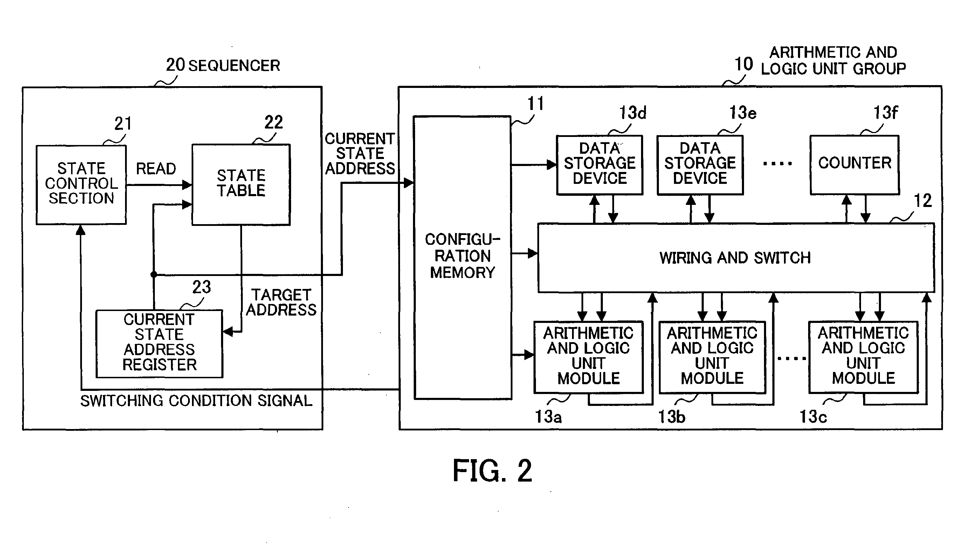

A technique, such as a data flow processor (DFP), for dynamically reconfiguring configurable modules including cell units two-dimensionally or multi-dimensionally arranged is proposed (see, for example, Japanese PCT Application Translation Publication No. 2001-510650, Fig. 2).

With conventional reconfigurable processors, however, timing with which a condition for switching an application is generated cannot be set freely.

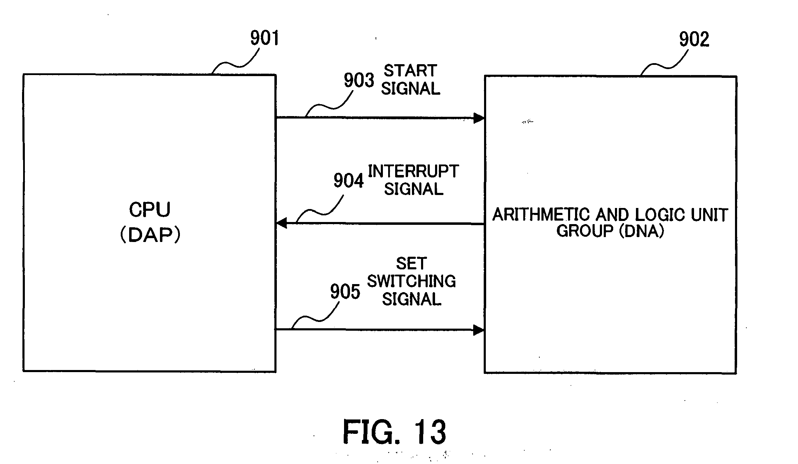

Fig. 13 is a simplified view showing a method for switching the contents of an arithmetic and logic unit group in a conventional DAP/DNA. With a DAP/DNA, when operations assigned to one set terminate and operations assigned to the next set are performed, an interrupt signal 904 is sent from a DNA 902, being an arithmetic and logic unit group, to a DAP 901, being a general-purpose CPU, a set switching signal 905 is outputted from the DAP 901 to the DNA 902 in response to the interrupt signal 904, and the set is switched. After the set is switched, a start signal 903 is outputted from the DAP 901 to the DNA 902 and the operations assigned to the next set are begun. Moreover, after data is written into an external memory, whether a switching condition comes into existence is decided.

As stated above, whether a condition for switching a set in the DNA 902 and reconfiguring the DNA 902 comes into existence can be decided only after operations assigned to one set terminate or after data is written into the external memory. That is to say, whether a condition for switching a set comes into existence cannot be decided while a process is being performed in the DNA 902.

This is the same with a DRP. A switching condition signal is outputted to a state control management section after a series of processes by a group of arithmetic and logic units two-dimensionally arranged terminate.

In addition, with a technique for dynamically reconfiguring configurable modules, the modules are reconfigured as a response to the occurrence of an event or a combination of events. Therefore, switching timing is determined.

As described above, with the conventional reconfigurable processors, timing at which whether a condition for switching an application comes into existence is decided is limited and timing at which a condition for switching an application is generated cannotbe setfreely. This puts restrictions on application design and contributes to the difficulty of implementing a desired application.

For example, to execute multiple FOR statements, it is desirable that multiple counters for implementing these multiple FOR statements should be located. However, it is impossible to make a transition to the next state on the basis of information outputted from an arithmetic and logic unit. Accordingly, multiple FOR statements cannot be executed by the conventional reconfigurable processors or a rather redundant configuration must be adopted to execute them.

### SUMMARY OF THE INVENTION

An object of the present invention is to provide a reconfigurable processor and semiconductor device that can decide a condition for switching an application executed by an arithmetic and logic unit group on the basis of output from any component included in the arithmetic and logic unit group.

A reconfigurable processor with an arithmetic and logic unit group including a plurality of arithmetic and logic units and a sequencer for controlling the operation of the arithmetic and logic unit group is provided. This reconfigurable processor comprises a switching condition associating section for using output from any components included in the arithmetic and logic unit group as switching conditions for switching the operation of the arithmetic and logic unit group, and for associating the output with switching condition codes; and a switching condition code output section for deciding, each time the output from the components set as the switching conditions by the switching condition associating section is produced, whether the switching conditions come into existence, and for outputting a switching condition code corresponding to a switching condition which comes into existence.

In addition, a semiconductor device which has an arithmetic and logic unit group including a plurality of arithmetic and logic units and a sequencer for controlling the operation of the arithmetic and logic unit group and in which the operating state of the arithmetic and logic unit group is reconfigured by the sequencer is provided. This semiconductor device comprises a switching condition associating section for using output from any components included in the arithmetic and logic unit group as switching conditions for switching the operation of the arithmetic and logic unit group, and for associating the output with switching condition codes; a switching condition code output section for deciding, each time the output from the components set as the switching conditions by the switching condition associating section is produced, whether the switching conditions come into existence, and for outputting a switching condition code corresponding to a switching condition which comes into existence; and a sequencer for switching the operating state of the arithmetic and logic unit group according to the switching condition code outputted from the switching condition code output section.

The above and other objects, features and advantages of the present invention will become apparent from the following description when taken in conjunction with the accompanying drawings which illustrate preferred embodiments of the present invention by way of example.

### BRIEF DESCRIPTION OF THE DRAWINGS

Fig. 1 is a schematic view of the present invention applied to embodiments.
Fig. 2 is a block diagram showing the structure of the whole of a reconfigurable processor according to an embodiment of the present invention.
Fig. 3 shows an example of the structure of a configuration memory according to the embodiment of the present invention.
Fig. 4 shows an example of the structure of a wiring and switch according to the embodiment of the present invention.
Fig. 5 is a block diagram showing an example of the configuration of an arithmetic and logic unit group for deciding whether a switching condition comes into existence, according to the embodiment of the present invention.
Fig. 6 shows the structure of a switching condition decision circuit according to a first embodiment.
Fig. 7 shows the structure of a switching condition decision circuit according to a second embodiment.
Fig. 8 is a block diagram showing an example of the structure of counter modules in the second embodiment.
Fig. 9 shows the structure of a switching condition decision circuit according to a third embodiment.
Fig. 10 shows an example of the structure of a programmable switch in the third embodiment.
Fig. 11 shows the structure of a switching condition decision circuit according to a fourth embodiment.
Fig. 12 shows the structure of a switching condition decision circuit according to a fifth embodiment.
Fig. 13 is a simplified view showing a method for switching the contents of an arithmetic and logic unit group in a conventional DAP/DNA.

### DESCRIPTION OF THE PREFERRED EMBODIMENTS

Embodiments of the present invention will now be described with reference to the drawings. An overview of the present invention applied to the embodiments will be given first and then the concrete contents of the embodiments will be described.

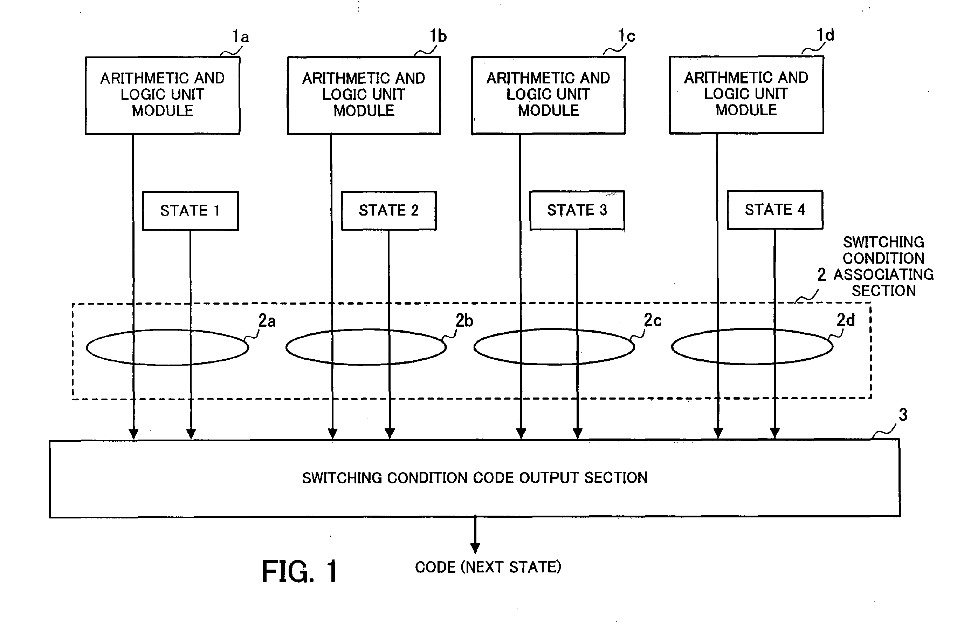

Fig. 1 is a schematic view of the present invention applied to the embodiments.

In a reconfigurable processor according to the present invention, an arithmetic and logic unit group that performs an operation process is controlled by a sequencer (not shown). A plurality of pieces of setting information, such as connection between arithmetic and logic units included in the arithmetic and logic unit group and a process performed by each arithmetic and logic unit, which determine the operation of the arithmetic and logic unit group are set in advance. The sequencer switches these pieces of setting information according to a predetermined switching condition to control the operation of the arithmetic and logic unit group.

The arithmetic and logic unit group includes arithmetic and logic unit modules 1a, 1b, 1c, and 1d each of which performs a unique operation process, a switching condition associating section 2, and a switching condition code output section 3.

Each of the arithmetic and logic unit modules 1a, 1b, 1c, and 1d performs processes, such as an arithmetic operation, a logic operation, counting, and address generation and is connected to the switching condition code output section 3 via the switching condition associating section 2. Each time an operation terminates, each of the arithmetic and logic unit modules 1a, 1b, 1c, and 1d outputs an operation result generated to the switching condition code output section 3.

The switching condition associating section 2 associates output from the arithmetic and logic unit module 1a used as a switching condition for switching the operating state of the arithmetic and logic unit group with switching condition codes. In this example, switching condition codes are expressed as a state 1, a state 2, a state 3, and a state 4. A state 1 associating section 2a associates output from the arithmetic and logic unit module 1a with the state 1. That is to say, the state 1, being a switching condition code, is generated according to output from the arithmetic and logic unit module 1a. Similarly, a state 2 associating section 2b associates output from the arithmetic and logic unit module 1b with the state 2, a state 3 associating section 2c associates output from the arithmetic and logic unit module 1c with the state 3, and a state 4 associating section 2d associates output from the arithmetic and logic unit module 1d with the state 4.

The switching condition code output section 3 accepts the output from the arithmetic and logic unit modules 1a, 1b, 1c, and 1d to which it is connected via the switching condition associating section 2 and decides whether a switching condition comes into existence. For example, the switching condition code output section 3 compares output from an arithmetic and logic unit module with a predetermined reference value. If they match, then the switching condition code output section 3 decides that a switching condition comes into existence. At this time the switching condition code output section 3 outputs a switching condition code associated with the output from the arithmetic and logic unitmodule. The switching condition code outputted indicates the next state to which the sequencer causes the arithmetic and logic unit group to make a transition.

The operation of the reconfigurable processor having the above-mentioned structure will now be described.

The switching condition associating section 2 associates output from the arithmetic and logic unit modules 1a, 1b, 1c, and 1d used as the conditions for switching the state of the arithmetic and logic unit group with the switching condition codes. The arithmetic and logic unit modules 1a, 1b, 1c, and 1d output from which is set as the switching conditions by the switching condition associating section 2 output operation results to the switching condition code output section 3. Each time the arithmetic and logic unit modules 1a, 1b, 1c, and 1d operate, the switching condition code output section 3 decides from the operation results generated whether a condition for switching the state of the arithmetic and logic unit group comes into existence. If a condition for switching the state of the arithmetic and logic unit group comes into existence, then the switching condition code output section 3 outputs a switching condition code associated with the condition. The switching condition code outputted is inputted to the sequencer. The sequencer switches the state of the arithmetic and logic unit group on the basis of the switching condition code.

As stated above, each time the arithmetic and logic unit modules operate, a decision whether a switching condition comes into existence is made. As a result, the state of the arithmetic and logic unit group can be switched at any timing during execution of an application. Moreover, a decision whether a switching condition comes into existence can be made on a plurality of arithmetic and logic unit modules at the same time. This shortens processing time compared with the conventional reconfigurable processors in which whether a switching condition comes into existence is decided after the termination of a series of processes.

The switching condition associating section 2 and the switching condition code output section 3 included in the reconfigurable processor according to the present invention can be realized by combining arithmetic and logic unit modules included in the arithmetic and logic unit group or dedicated modules in which a mechanism for deciding whether a switching condition comes into existence is located. For example, an arithmetic and logic unit for performing a predetermined operation, a comparator for accepting a value outputted from the arithmetic and logic unit, comparing it with a reference value, and outputting a decision result as a flag, a selector for outputting a predetermined switching condition code according to the flag outputted from the comparator, and the like are combined to decide whether a switching condition comes into existence. A dedicated switching condition decision circuit may be located outside the arithmetic and logic unit group.

The concrete contents of embodiments of the present invention will now be described in detail with reference to the drawings.

Fig. 2 is a block diagram showing the structure of the whole of a reconfigurable processor according to an embodiment of the present invention.

A reconfigurable processor comprises an arithmetic and logic unit group 10 including a plurality of arithmetic and logic units arranged and a sequencer 20 for controlling the operation of each arithmetic and logic unit module included in the arithmetic and logic unit group 10.

The arithmetic and logic unit group 10 includes a configuration memory 11, a wiring and switch 12, component arithmetic and logic unit modules 13a, 13b,..., and 13c, data storage devices 13d, 13e, and so on, and a counter 13f.

The configuration memory 11 stores setting information, such as contents to be performed by each arithmetic and logic unit module included in the arithmetic and logic unit group 10, wiring paths between arithmetic and logic unit modules, and data necessary for operations, for setting the operation of the arithmetic and logic unit group 10. One piece of setting information corresponds to the "state" of one circuit configuration of the arithmetic and logic unit group 10. A plurality of states are set in the configuration memory 11. The arithmetic and logic unit group 10 operates in a state designated by the sequencer 20 . Each arithmetic and logic unit module and the wiring and switch 12 operate in accordance with contents set in the configuration memory 11. The wiring and switch 12 includes a wiring section and a switch section for making and switching connection between arithmetic and logic unit modules in accordance with contents set in the configuration memory 11. Each of the arithmetic and logic unit modules 13a, 13b,..., and 13c performs a predetermined operation on input signals inputted via the wiring and switch 12 and outputs a result via the wiring and switch 12. The arithmetic and logic unit modules have the data storage devices 13d, 13e, and so on, being memories or registers, for storing data for data processing and the counter 13f. In addition, each arithmetic and logic unit module has an interface for exchanging data and addresses with an external unit, an address generator, and the like. In Fig. 2, the configuration memory 11 is located in the arithmetic and logic unit group 10. However, the configuration memory 11 maybe located in the sequencer 20 or outside the arithmetic and logic unit group 10 and the sequencer 20. In addition, the configuration memory 11 may be divided to locate it in the arithmetic and logic unit group 10 and the sequencer 20.

The sequencer 20 includes a state control section 21, a state table 22, and a current state address register 23.

The state control section 21 sets a state to which the arithmetic and logic unit group 10 next makes a transition in response to a switching condition signal inputted from the arithmetic and logic unit group 10. This switching condition signal includes notification of the occurrence of a switching condition and a switching condition code. Addresses used in the state table 22 are the same as those used in the configuration memory 11. Each entry in the state table 22 stores an operation code indicative of a transition to the next entry and the address of an entry which may be selected. The current state address register 23 stores an address (in the state table 22 and the configuration memory 11) indicative of the current state.

In the above-mentioned reconfigurable processor, the arithmetic and logic unit group 10 operates in a state which is based on setting information at a specified address in the configuration memory 11 designated by the sequencer 20. When the decision that a switching condition comes into existence is made on the basis of output from an arithmetic and logic unit module, a switching condition signal including a switching condition code is sent from the arithmetic and logic unit group 10 to the sequencer 20.

In the sequencer 20, the state control section 21 is started by the switching condition signal, a state to which the arithmetic and logic unit group 10 next makes a transition is determined from the switching condition code and an entry in the state table 22, anaddress (targetaddress) at which setting information indicative of the state is registered is calculated, and the calculated target address is set in the current state address register 23, the state table 22, and the configuration memory 11. As a result, the specified address in the configuration memory 11 is changed to the target address and the arithmetic and logic unit group 10 makes a transition to the state.

The arithmetic and logic unit group 10 will now be described in detail. The configuration memory 11 will be described first and then the wiring and switch 12 will be described.

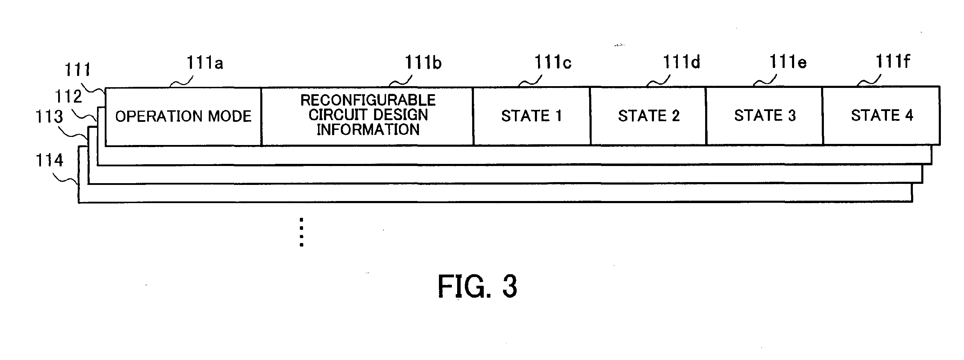

Fig. 3 shows an example of the structure of the configuration memory according to the embodiment of the present invention.

The configuration memory 11 stores configuration data which determines the operation of the arithmetic and logic unit group 10 in each state. In this example, configuration data 111, 112, 113, 114, and so on are stored according to states. Each state is managed by an address.

An operation mode 111a, reconfigurable circuit design information 111b, a state 1 (111c), a state 2 (111d), a state 3 (111e), and a state 4 (111f) are stored for each state. The operation mode 111a is information for identifying this state. The reconfigurable circuit design information 111b is design information indicative of the operation of each arithmetic and logic unit and connection between arithmetic and logic units in a reconfigurable circuit in this operation mode. Candidates for the next state of this circuit configuration are described as the state 1 (111c), the state 2 (111d), the state 3 (111e), and the state 4 (111f). Actually, addresses in the configuration memory 11 are directly described or data from which these addresses can be generated directly by performing operations is described. Each candidate state is associated with a switching condition. When a switching condition comes into existence, the process for making a transition to the corresponding state is performed. How to associate a candidate state with a switching condition will be described later.

In this example, the number of candidate states registered is four, but any number of candidate states may be registered.

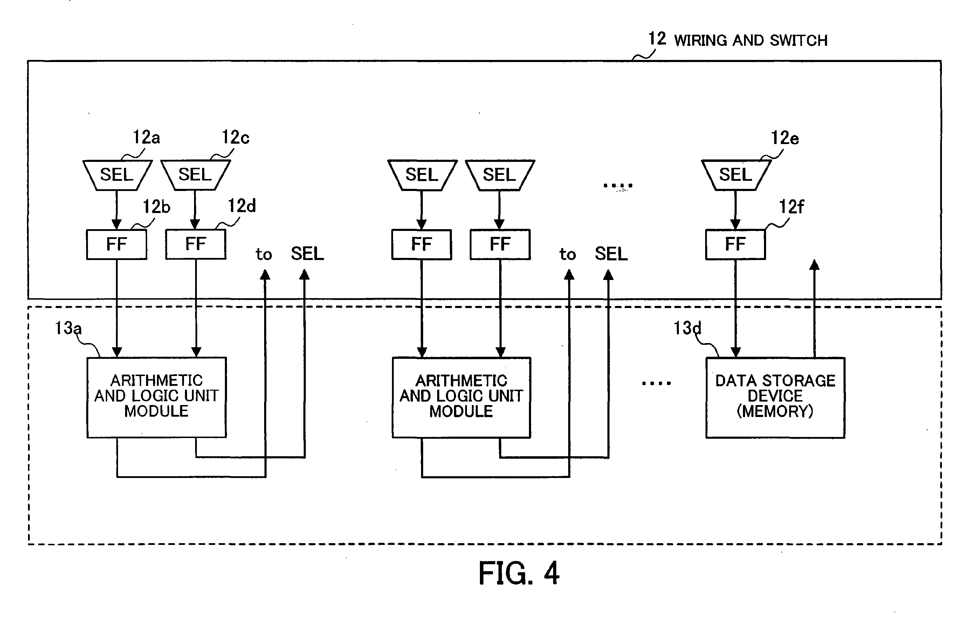

The wiring and switch 12 will now be described. Fig. 4 shows an example of the structure of the wiring and switch according to the embodiment of the present invention.

On the input side of the arithmetic and logic unit group 10, flip-flops (FFs) are located and selectors are located in front of them. In this example, selectors (SELs) 12a and 12c and FFs 12b and 12d are located on the input side of the arithmetic and logic unit module 13a. Similarly, a SEL 12e and an FF 12f are located on the input side of the data storage device (memory) 13d. An output port of an arithmetic and logic unit or a memory is connected to an input port of each selector.

The configuration of the arithmetic and logic unit group is determined by the above-mentioned configuration memory and the wiring and switch.

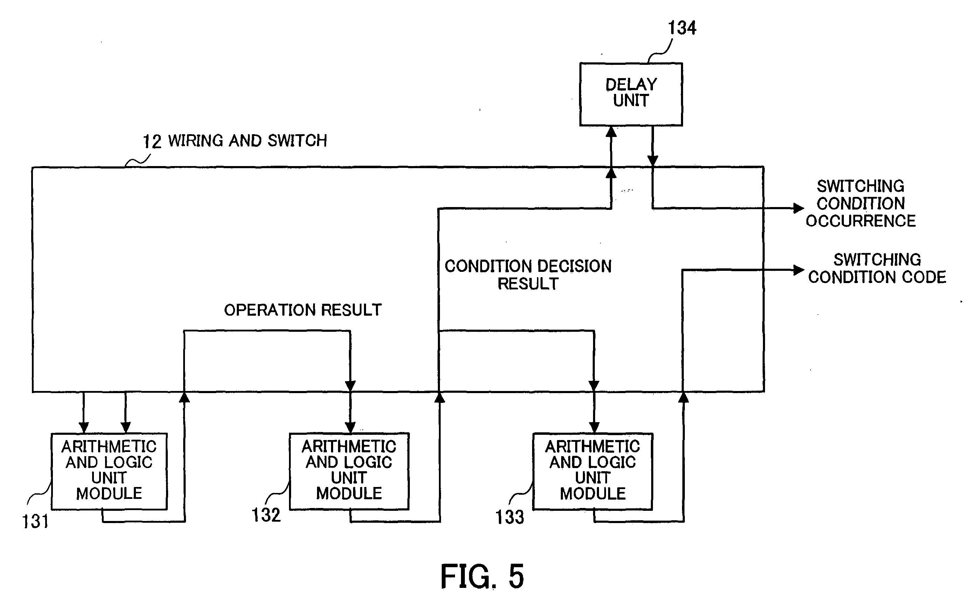

An example of the configuration of the arithmetic and logic unit group 10 will now be described. Fig. 5 is a block diagram showing an example of the configuration of the arithmetic and logic unit group for deciding whether a switching condition comes into existence, according to the embodiment of the present invention. In Fig. 5, selectors and FFs included in the wiring and switch 12 are not shown.

By this example of the configuration of the arithmetic and logic unit group 10, whether a switching condition comes into existence is decided on the basis of an operation result outputted from an arithmetic and logic unit module 131 and a predetermined switching condition code is generated. The arithmetic and logic unit group 10 includes the arithmetic and logic unit module 131 for performing a predetermined operation, an arithmetic and logic unit module 132 for comparing an input value with a reference value, an arithmetic and logic unit module 133 for outputting a predetermined "switching condition code," and a delay unit 134 for delaying an input signal and outputting it as notification of "switching condition occurrence". An operation result outputted from the arithmetic and logic unit module 131 is inputted to the arithmetic and logic unit module 132 which decides whether a switching condition comes into existence by the wiring and switch 12. The result of a decision whether the switching condition comes into existence outputted from the arithmetic and logic unit module 132 is inputted to the arithmetic and logic unit module 133 which generates the "switching condition code" and the delay unit 134 which generates the notification of "switching condition occurrence" by the wiring and switch 12.

In the arithmetic and logic unit group 10 configured in this way, the result of the operation performed by the arithmetic and logic unit module 131 is outputted to the arithmetic and logic unit module 132. The arithmetic and logic unit module 132 compares the operation result inputted with the reference value it holds in advance and outputs a result as the result of a decision whether the switching condition comes into existence. For example, if the operation result is zero, the decision that the switching condition comes into existence is outputted. When the decision that the switching condition comes into existence is inputted, the arithmetic and logic unit module 133 outputs the "switching condition code". The delay unit 134 delays input and outputs it. That is to say, when the decision that the switching condition comes into existence is outputted from the arithmetic and logic unit module 132, the "switching condition code" is outputted from the arithmetic and logic unit module 133 and the notification of "switching condition occurrence" is outputted from the delay unit 134 after predetermined delay time. A switching condition signal which indicates that the switching condition comes into existence is outputted to the sequencer 20 in this way. Delay time caused by the delay unit 134 can be set arbitrarily. For example, this delay time may be zero.

In this example, the arithmetic and logic unit module 132 decides on the basis of the operation result inputted from the arithmetic and logic unit module 131 whether the switching condition comes into existence. However, a mechanism for deciding whether the switching condition comes into existence may be located in the arithmetic and logic unit module 131. Such a mechanism may be located in all of the arithmetic and logic unit modules or only in some of them.

Moreover, in this example the arithmetic and logic unit module 133 generates the fixed switching condition code according to the decision result outputted from the arithmetic and logic unit module 132. However, decisions whether a switching condition comes into existence may be outputted from a plurality of arithmetic and logic unit modules to the arithmetic and logic unit module 133 which generates the switching condition code. In this case, a switching condition code generated depends on which arithmetic and logic unit module outputs a decision whether a switching condition comes into existence. As a result, if there are n candidates for the next state to which the arithmetic and logic unit group makes a transition, one of the n candidates by which true is obtained can be determined on the basis of a maximum of n decisions whether a switching condition comes into existence.

In addition, in this example one switching condition decision circuit is located. However, any number of switching condition decision circuits each of which is the same as the above one can be located. By locating a plurality of switching condition decision circuits, a plurality of decisions whether a switching condition comes into existence can be made at the same time.

Mechanisms in which the arithmetic and logic unit group makes a decision whether a switching condition comes into existence according to first through fifth embodiments will now be described in order. These mechanisms will be shown by simplified circuits in the following descriptions, but in reality they include arithmetic and logic unit modules and a wiring and switch as shown in Fig. 4.

### [First Embodiment]

In the first embodiment, the relationship between arithmetic and logic unit modules which decide whether a switching condition comes into existence and switching condition codes is fixed by hardware.

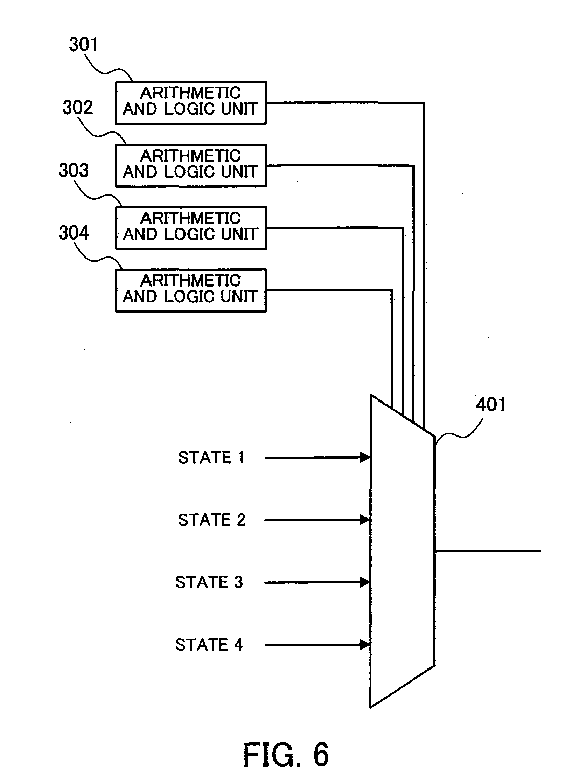

Fig. 6 shows the structure of a switching condition decision circuit according to the first embodiment. In a switching condition decision circuit according to the first embodiment, output from arithmetic and logic unit modules 301, 302, 303, and 304 is inputted to a selector switch 401.

Each of the arithmetic and logic unit modules 301, 302, 303, and 304 performs a predetermined operation. In addition, each of the arithmetic and logic unit modules 301, 302, 303, and 304 compares an operation result with a reference value at which a switching condition comes into existence and outputs whether they match, that is to say, whether the switching condition comes into existence as flag information. Each of the arithmetic and logic unit modules 301, 302, 303, and 304 may be an arithmetic and logic unit module which performs these processes in block or a combination of an arithmetic and logic unit which performs only the operation and a comparator which makes the comparison.

The selector switch 401 has four input terminals. A fixed state value generated by hardware is inputted to each input terminal. For example, an arithmetic and logic unit module connected to a first input terminal always generates a state 1. Similarly, an arithmetic and logic unit module connected to a second input terminal always generates a state 2, an arithmetic and logic unit module connected to a third input terminal always generates a state 3, and an arithmetic and logic unit module connected to a fourth input terminal always generates a state 4. As a result, the arithmetic and logic unit modules 301, 302, 303, and 304 are associated with the states 1, 2, 3, and 4 respectively.

In the above-mentioned switching condition decision circuit, if flag information outputted from, for example, the arithmetic and logic unit module 301 is set, then the state 1 is outputted from the selector switch 401. If flag information outputted from each arithmetic and logic unit module is set in this way, then a state associated with it is outputted.

In this example, the selector switch 401 is a four-to-one switch for selecting one of four input signals. However, a selector switch of another type may be used. There is no limit to the number of input terminals or output terminals on a selector switch. For example, a five-to-one or seven-to-four selector switch may be used.

If a condition which indicates a plurality of states at the same time comes into existence, then a state which has a higher priority is selected and outputted. In this case, priorities are held in advance in hardware or are registered in advance as setting information.

### [Second Embodiment]

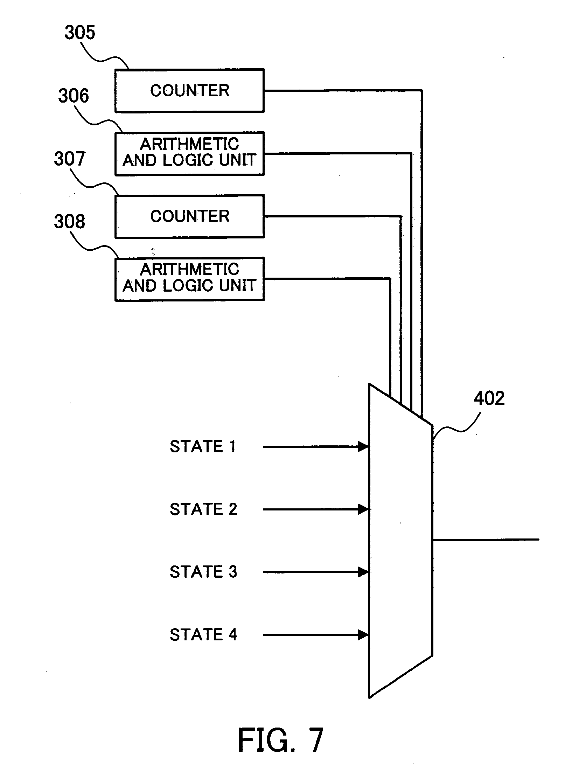

In the first embodiment, whether a switching condition comes into existence is decided by using output from the arithmetic and logic unit modules. In the second embodiment, output from counter modules is also used for deciding whether a switching condition comes into existence. Fig. 7 shows the structure of a switching condition decision circuit according to the second embodiment.

In a switching condition decision circuit according to the second embodiment, output from arithmetic and logic unit modules 306 and 308 and counter modules 305 and 307 is inputted to a selector switch 402. The operation of the selector switch 402 is the same as that of the selector switch 401 in the first embodiment.

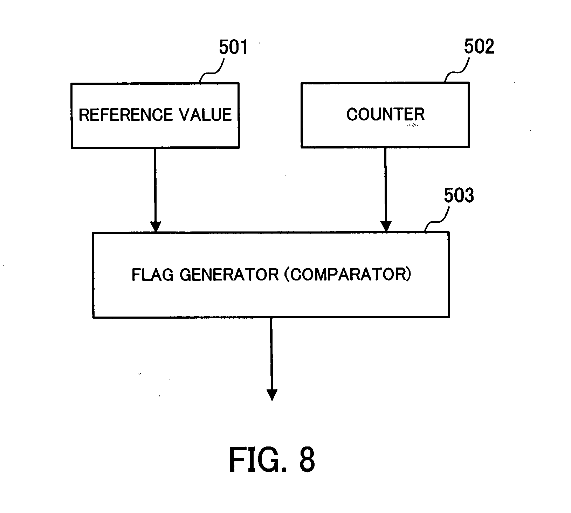

The structure of the counter modules 305 and 307 will now be described. Fig. 8 is a block diagram showing an example of the structure of the counter modules in the second embodiment.

Each counter module includes a reference value register 501 for holding a reference value at which a switching condition comes into existence, a counter 502 for counting the number of input signals, such as clock signals, and a FLAG generator (comparator) 503 for comparing the value of the counter 502 with the reference value held by the reference value register 501 and for outputting a comparison result as flag information. The reference value register 501 holds output from an arithmetic and logic unit module or data set as configuration data as the reference value.

In each counter module having the above-mentioned structure, the FLAG generator (comparator) 503 compares a value which the counter 502 indicates as a result of counting the number of predetermined input signals with the reference value held by the reference value register 501. If they match, then the FLAG generator (comparator) 503 outputs flag information which indicates that the switching condition comes into existence.

When flag information outputted from one of the counter modules 305 and 307 having the above-mentioned structure or flag information outputted from one of the arithmetic and logic unit modules 306 and 308 is set, the selector switch 402 outputs the corresponding state. This is the same with the first embodiment.

In this example, output from the arithmetic and logic unit modules and the counter modules is used for deciding whether a switching condition comes into existence. However, only output from counter modules may be used for deciding whether a switching condition comes into existence. If the arithmetic and logic unit modules are address generator, a switching condition decision circuit in which whether a switching condition comes into existence is decided on the basis of a predetermined address generated by each address generator can be built in the same way.

### [Third Embodiment]

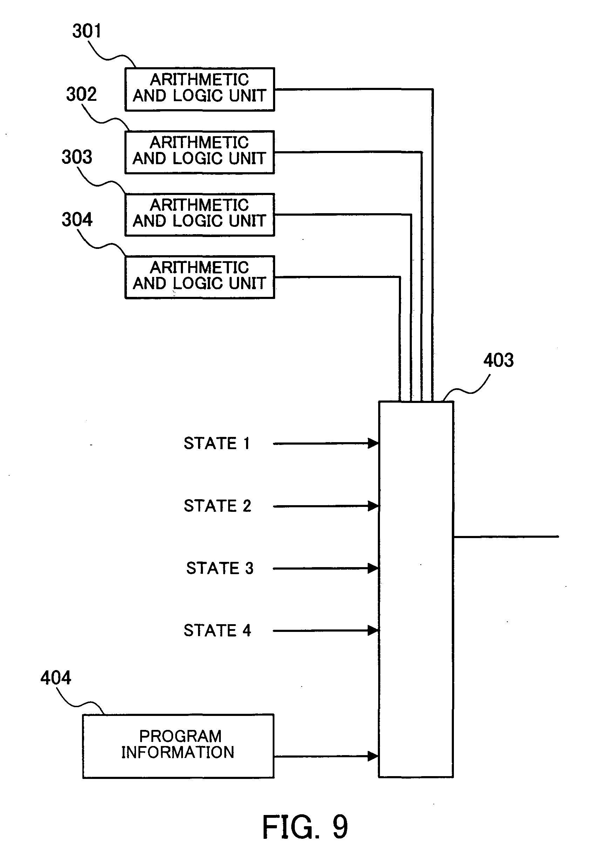

In the first and second embodiments, the relationship between the arithmetic and logic unit modules and the states is fixed by the hardware. In the third embodiment, however, the relationship between arithmetic and logic unit modules and states is set in a programmable way. Fig. 9 shows the structure of a switching condition decision circuit according to the third embodiment.

In a switching condition decision circuit according to the third embodiment, output from the arithmetic and logic unit modules 301, 302, 303, and 304 in the first embodiment is inputted to a programmable switch 403. The programmable switch 403 accepts setting information from a program information register 404 which stores program information for determining correspondences between the arithmetic and logic unit modules and states via a bus and outputs a state associated with one of the arithmetic and logic unit modules 301, 302, 303, and 304 flag information from which is set by the setting information.

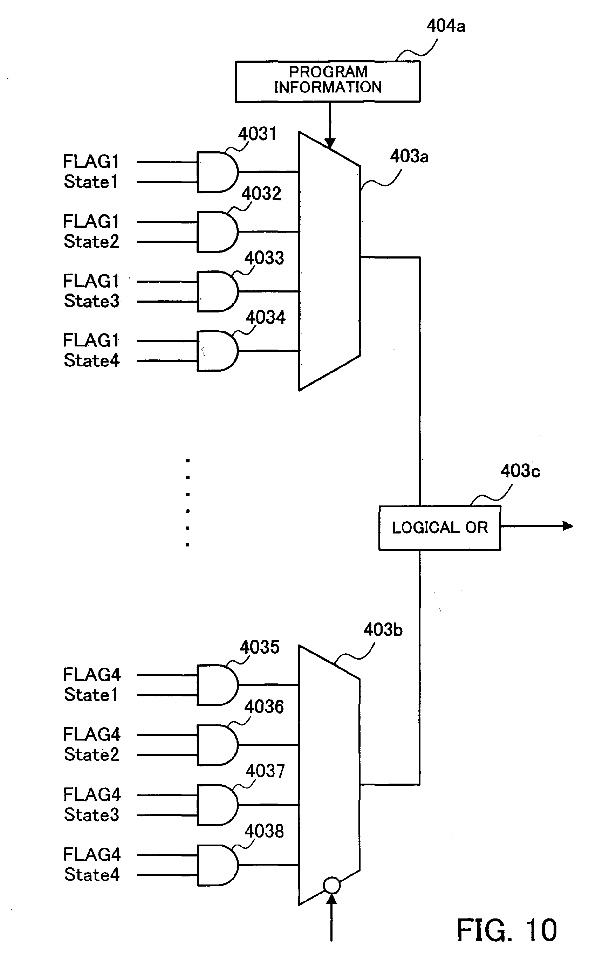

Fig. 10 shows an example of the structure of the programmable switch in the third embodiment.

The programmable switch 403 includes AND circuits, selectors, and an OR circuit.

Each AND circuit calculates the logical product of output from an arithmetic and logic unit module and a state and outputs it to a selector located for the arithmetic and logic unit module. For example, AND 4031 which calculates the logical product of output FLAG1 from an arithmetic and logic unit module and State1, AND 4032 which calculates the logical product of FLAG1 and State2, AND 4033 which calculates the logical product of FLAG1 and State3, and AND 4034 which calculates the logical product of FLAG1 and State4 are located. Similarly, AND 4035 which calculates the logical product of output FLAG4 from an arithmetic and logic unit module and State1, AND 4036 which calculates the logical product of FLAG4 and State2, AND 4037 which calculates the logical product of FLAG4 and State3, and AND 4038 which calculates the logical product of FLAG4 and State4 are located. AND circuits are also located for arithmetic and logic unit modules which output FLAG2 and FLAG3 in the same way.

Each of selectors 403a,..., and 403b accepts output from AND circuits located for each piece of FLAG information and selects and outputs output from one of the AND circuits on the basis of program information stored in a program information register 404a. For example, a selector 403a is located for FLAG1 and selects and outputs output from one of the AND circuits 4031, 4032, 4033, and 4034 set by program information. The information stored in the program information register 404a is the same as that stored in the configuration memory in which a plurality of circuit configurations are set. Similarly, a selector 403b is located for FLAG4 and selects and outputs output from one of the AND circuits 4035, 4036, 4037, and 4038 set by program information

An OR circuit 403c calculates the logical sum of output from the selectors 403a,..., and 403b and outputs it as a next state.

By associating arithmetic and logic unit modules with states in this way by using a programmable switch, design can be made more freely.

### [Fourth Embodiment]

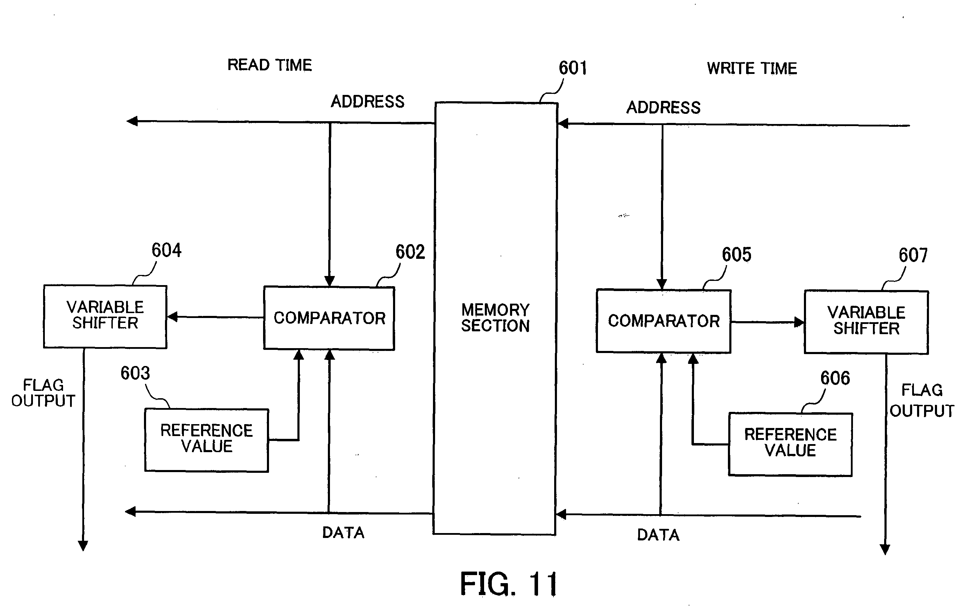

In the first through third embodiments, whether a switching condition comes into existence is decided by using output from the arithmetic and logic unit modules or the counter modules. In the fourth embodiment, however, when a predetermined memory or predetermined data is read/written by a memory interface, a switching condition comes into existence. Fig. 11 shows the structure of a switching condition decision circuit according to the fourth embodiment.

A switching condition decision circuit according to the fourth embodiment includes a comparator 602, a reference value register 603, and a variable shifter 604 for deciding at the time of a memory section 601 being read whether a switching condition comes into existence and a comparator 605, a reference value register 606, and a variable shifter 607 for deciding at the time of the memory section 601 being written whether a switching condition comes into existence.

Each of the comparators 602 and 605 accepts an address or data at read or write time, compares it with a reference value which is held in the reference value register 603 or 606 and at which a switching condition comes into existence, and decides whether the switching condition comes into existence.

Each of the variable shifters 604 and 607 accepts flag information which indicates whether the switching condition comes into existence and which is generated by the comparator 602 or 605, delays it by predetermined time, and outputs it. Delay time is variable. As a result, the state of the arithmetic and logic unit group can be switched at the timing at which, for example, writing to the memory section 601 terminates.

In the switching condition decision circuit having the above-mentioned structure, by setting in advance data, such as a predetermined address in the memory section 601 or a special code indicative of the end of data stored, in the reference value register 603 or 606, a switching condition comes into existence when reading from or writing into the predetermined address is performed or when predetermined data is read or written.

Each of the comparators 602 and 605 compares the address or the data with the reference value held in the reference value register 603 or 606 and decides whether the switching condition comes into existence. Each of the variable shifters 604 and 607 delays flag information which indicates that the switching condition comes into existence by arbitrary time and outputs it.

### [Fifth Embodiment]

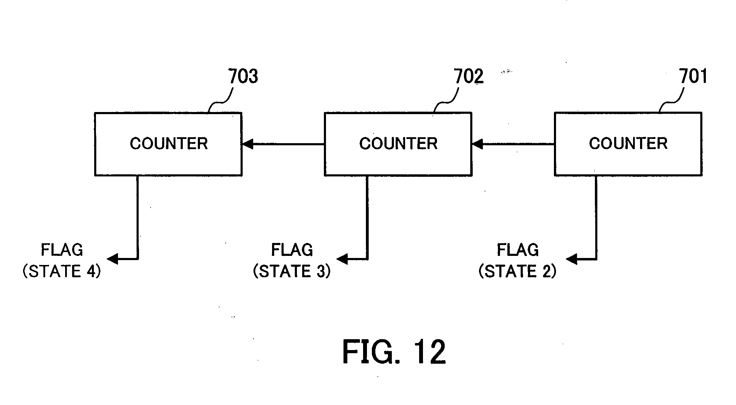

In the fifth embodiment, execution of multiple FOR statements will be described. Fig. 12 shows the structure of a switching condition decision circuit according to the fifth embodiment.

In a switching condition decision circuit according to the fifth embodiment, a plurality of counter modules are connected in series by carry output. In this example, carry output from a counter module 701 is inputted to a counter module 702 and carry output from the counter module 702 is inputted to a counter module 703. The structure of each counter module is the same as that of the counter modules shown in Fig. 8. When a count matches a reference value at which a switching condition comes into existence, each counter module outputs flag information and produces carry output. In addition, each of the counter modules 701, 702, and 703 is associated with a state. In this example, the counter modules 701, 702, and 703 are associated with states 2, 3, and 4, respectively.

In the switching condition decision circuit having the above-mentioned structure, when the counter module 701 reaches a predetermined reference value, flag information corresponding to the state 2 is outputted and a carry is outputted to the counter module 702. At this time the counter module 702 begins to count. When the counter module 702 reaches a reference value, flag information corresponding to the state 3 is outputted and a carry is outputted to the counter module 703. At this time the counter module 703 begins to count. When the counter module 703 reaches a reference value, flag information corresponding to the state 4 is outputted. Therefore, even if the number of bits which can be used in each of the counter modules 701, 702, and 703 is small, the number of bits which can be used in the whole of the counter modules 701, 702, and 703 is large. In addition, by defining predetermined applications according to the states, a process can be performed when each switching condition comes into existence. Accordingly, each of multiple FOR statements can be executed.

For example, to execute the multiple FOR statements 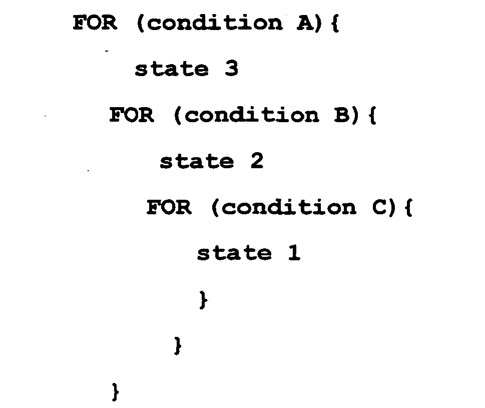 a process to be performed in an inmost FOR statement is expressed by the state 1, a process to be performed in a FOR statement outside the inmost FOR statement is expressed by the state 2, and a process to be performed in a FOR statement outside this FOR statement is expressed by the state 3. In addition, the counter module 701 decides whether the switching condition C comes into existence, the counter module 702 decides whether the switching condition B comes into existence, and the counter module 703 decides whether the switching condition A comes into existence.

As a result, when the switching condition C comes into existence and the counter module 701 outputs a flag (state 2), the state 1 terminates and execution of the state 2 in the FOR statement outside it is begun. Similarly, when the switching condition B comes into existence and the counter module 702 outputs a flag (state 3) , the state 2 terminates and execution of the state 3 is begun. Conventionally, it has been impossible to execute multiple FOR statements. By using each of counter modules connected in series as a counter for one of multiple FOR statements in this way, however, the multiple FOR statements can be executed easily.

In the present invention, output from the arithmetic and logic unit modules included in the arithmetic and logic unit group is associated in advance with the switching condition codes on the basis of which the operating state of the arithmetic and logic unit group is switched. Each time an arithmetic and logic unit module operates, whether a switching condition comes into existence is decided. If the switching condition comes into existence, then the corresponding switching condition code is outputted. Accordingly, each time an arithmetic and logic unit module operates, whether a switching condition comes into existence can be decided. That is to say, whether a switching condition comes into existence can be decided more freely. As a result, a desired application can be implemented easily.

In addition, a decision whether a switching condition comes into existence can be made on a plurality of arithmetic and logic unit modules at the same time. This shortens processing time compared with the case in which whether a switching condition comes into existence is decided after the termination of a series of processes.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

## Claims

1. A reconfigurable processor with an arithmetic and logic unit group including a plurality of arithmetic and logic units and a sequencer for controlling the operation of the arithmetic and logic unit group, the processor comprising:
a switching condition associating section for using output from any components included in the arithmetic and logic unit group as switching conditions for switching the operation of the arithmetic and logic unit group, and for associating the output with switching condition codes; and
a switching condition code output section for deciding, each time the output from the components set as the switching conditions by the switching condition associating section is produced, whether the switching conditions come into existence, and for outputting a switching condition code corresponding to a switching condition which comes into existence.

2. The reconfigurable processor according to claim 1,
wherein the switching condition associating section associates in advance output from predetermined components with the switching condition codes by wirings.

3. The reconfigurable processor according to claim 1,
wherein the switching condition associating section stores connection between output from any components and the switching condition codes associated in a program information storage section as program information.

4. The reconfigurable processor according to claim 1,
wherein the switching condition code output section manages a plurality of correspondences between output from the components and the switching condition codes and selects one of the switching condition codes in accordance with priority determined in advance in the case of the switching conditions coming into existence for output from a plurality of components inputted.

5. The reconfigurable processor according to claim 1,
wherein:
the arithmetic and logic unit group operates on the basis of setting information in which the operation of the components and connection between the components are described; and
the switching condition associating section and the switching condition code output section are built by registering a combination of the components included in the arithmetic and logic unit group in the setting information.

6. The reconfigurable processor according to claim 1,
wherein included among the components output from which is associated with the switching conditions is an arithmetic and logic unit module including:
an arithmetic and logic unit for performing a predetermined operation;
a reference value storage section for storing a reference value at which a switching condition comes into existence; and
a comparator for comparing an operation result outputted from the arithmetic and logic unit with the reference value stored in the reference value storage section and for outputting a comparison result.

7. The reconfigurable processor according to claim 1,
wherein included among the components output from which is associated with the switching conditions is a counter module including:
a counter for counting a predetermined number;
a reference value storage section for storing a reference count value at which a switching condition comes into existence; and
a comparator for comparing a current value of the counter with the reference count value stored in the reference value storage section and for outputting a comparison result.

8. The reconfigurable processor according to claim 7,
wherein:
a plurality of counter modules are connected in series by a carry outputted from each counter module; and
the switching condition codes are associated with the plurality of counter modules connected in series by the switching condition associating section to execute multiple FOR statements.

9. The reconfigurable processor according to claim 1,
wherein included among the components output from which is associated with the switching conditions is a memory module including:
a memory section for storing predetermined data;
a reference value storage section for storing a reference address in the memory section or reference data by which a switching condition comes into existence; and
a comparator for comparing an address designated at the time of the memory section being written or read or data written or read with the reference address or the reference data stored , in the reference value storage section and for outputting a comparison result.

10. The reconfigurable processor according to claim 9,
wherein the memory module further including a delay unit for accepting output from the comparator, delaying the output by arbitrary time, and outputting the output.

11. A semiconductor device with an arithmetic and logic unit group including a plurality of arithmetic and logic units and a sequencer for controlling the operation of the arithmetic and logic unit group, the operating state of the arithmetic and logic unit group being reconfigured by the sequencer, the device comprising:
a switching condition associating section for using output from any components included in the arithmetic and logic unit group as switching conditions for switching the operation of the arithmetic and logic unit group, and for associating the output with switching condition codes; and
a switching condition code output section for deciding, each time the output from the components set as the switching conditions by the switching condition associating section is produced, whether the switching conditions come into existence, and for outputting a switching condition code corresponding to a switching condition which comes into existence, and
wherein
the sequencer switches the operating state of the arithmetic and logic unit group according to the switching condition code outputted from the switching condition code output section.
